# EUROPÄISCHE PATENTSCHRIFT

(11) **EP 1 168 556 B1**
(45) Veröffentlichungstag und Bekanntmachung des Hinweises auf die Patenterteilung: **18.08.2004**
(21) Anmeldenummer: 01114520.8
(22) Anmeldetag: 16.06.2001
(51) Int. Cl.: H02G 3/14

(54) **Rahmen-Anordnung für Elektro-Installationsgeräte insbesondere in Unterputz-Ausführung**
Frame assembly for electrical installation apparatus, in particular for flush mounting
Cadre pour appareil d'installation électrique, en particulier pour un montage à affleurement

(30) Priorität: 01.07.2000 DE 20011554 U
(43) Veröffentlichungstag der Anmeldung: 02.01.2002
(73) Patentinhaber: GIRA GIERSIEPEN GmbH. & CO. KG, D-42477 Radevormwald (DE)
(72) Erfinder: Borowski, Gudrun, 58256 Ennepetal (DE); Gediger, Frank, 42274 Wuppertal (DE); Riediger, Frank, 42929 Wermelskirchen (DE)
(74) Vertreter: Patentanwälte Dr. Solf & Zapf

(56) Entgegenhaltungen:
- FR-A- 1 457 719
- PATENT ABSTRACTS OF JAPAN vol. 1996, no. 08, 30. August 1996 (1996-08-30) & JP 08 098366 A (MATSUSHITA ELECTRIC WORKS LTD), 12. April 1996 (1996-04-12)

## Beschreibung

Die vorliegende Erfindung betrifft eine Rahmen-Anordnung für Elektro-Installationsgeräte, wie Schalter, Steckdosen und dergleichen, insbesondere für Unterputz-Geräte, mit einem an dem Installationsgerät befestigbaren Rahmenelement zum Abdecken eines einen Zentraleinsatz des Installationsgerätes umschließenden Flächenbereiches.

Bei Unterputz-Installationsgeräten sitzt üblicherweise deren Geräteeinsatz in einer Wanddose und wird darin über einen flächig auf der Wand- bzw. Montagefläche liegenden Tragring gehalten. Der Geräteeinsatz weist einen Zentraleinsatz auf, der z.B. im Falle eines Schalters von mindestens einer Schalterwippe oder im Falle einer Steckdose von einem sog. Schuko-Topf gebildet ist. Der den jeweiligen Zentraleinsatz umschließende Übergangsbereich zur Wand- bzw. Montagefläche wird dabei in der Regel durch einen einteiligen, flachen Abdeckrahmen abgedeckt. Dieses Rahmenelement wird dabei üblicherweise nur mittelbar über den jeweiligen Zentraleinsatz an dem Installationsgerät gehalten. Da oftmals - insbesondere bei Schaltern - der Zentraleinsatz ausschließlich über lösbare Rast- oder Klemmverbindungen an dem Installationsgerät befestigt wird, sind alle Einzelteile auch relativ einfach und ohne besondere Werkzeuge auch wieder demontierbar. Dies kann - vor allem in öffentlichen Gebäuden - zu dem Nachteil einer erhöhten Diebstahlgefahr führen, weil die Geräte relativ einfach und schnell auch von unberechtigten Personen und ohne mitgeführte Werkzeuge demontiert und entwendet werden können.

Der vorliegenden Erfindung liegt die Aufgabe zugrunde, bei Elektro-Installationsgeräten eine Demontage vor allem für nicht autorisierte Personen zu erschweren, dabei aber dennoch eine einfache und schnelle Montagemöglichkeit und eine hohe Montage-genauigkeit (Akkuratesse) zu erhalten.

Erfindungsgemäß wird dies durch eine Rahmen-Anordnung nach dem Anspruch 1 erreicht, wobei das Rahmenelement zumindest zweiteilig aus einem an dem Installationsgerät befestigbaren Trägerrahmen und einem an dem Trägerrahmen diesen überdeckend befestigbaren Blendrahmen besteht, wobei der Blendrahmen an dem Trägerrahmen über Steck-Schraub-Haltemittel derart befestigbar ist, daß eine Montage allein durch einen Steckfügevorgang sowie eine Demontage nur nach einem Schraublösevorgang durchführbar sind.

Durch die Erfindung ist somit zunächst eine sehr einfache und schnelle Montage durch einen einfachen Steckfügevorgang gewährleistet. Für eine nachfolgende Demontage ist allerdings jedenfalls ein Schrauberwerkzeug notwendig, was zumindest gegen "Gelegenheitsdiebe" eine erhöhte Diebstahlsicherung bedeutet. Besonders vorteilhaft ist es, wenn für die erfindungsgemäßen Steck-Schraub-Haltemittel Schraubenelemente verwendet werden, die jeweils einen speziellen Kraftangriff für ein Schrauberwerkzeug aufweisen, wie z.B. eine sog. "Torx"-Schraube (etwa sternförmiger Innenkraftangriff) oder eine Inbus- (Innensechskant-) Schraube. Um dabei den einfachen Steckfügevorgang für die Montage zu gewährleisten, wirkt jedes Schraubenelement mit einem dübelartig spreizbaren Einsteckansatz derart zusammen, daß durch Einstecken des Schraubenelementes eine kraft- und/oder formschlüssige Halteverbindung erreicht wird.

Eine weiter erhöhte Sicherheit kann zudem erreicht werden, wenn der Trägerrahmen in von dem Blendrahmen überdeckten Bereichen Schraubenlöcher zur zusätzlichen Schraubbefestigung im jeweils neben dem Installationsgerät liegenden Bereich einer Montagefläche aufweist. Diese Ausführung ist besonders dann vorteilhaft, wenn der den Trägerrahmen mittelbar an dem Installationsgerät halternde Zentraleinsatz nur über eine Rastverbindung befestigt wird, so daß grundsätzlich die gesamte Rahmen-Anordnung zusammen mit dem Zentraleinsatz auch wieder einfach abgezogen werden könnte. Dies wird aber durch die zusätzliche Schraubbefestigung des Trägerrahmens verhindert.

Weitere vorteilhafte Ausgestaltungsmerkmale der Erfindung sind in den Unteransprüchen enthalten.

Anhand eines in der Zeichnung veranschaulichten, bevorzugten Ausführungsbeispiels soll die Erfindung genauer erläutert werden. Dabei zeigen:

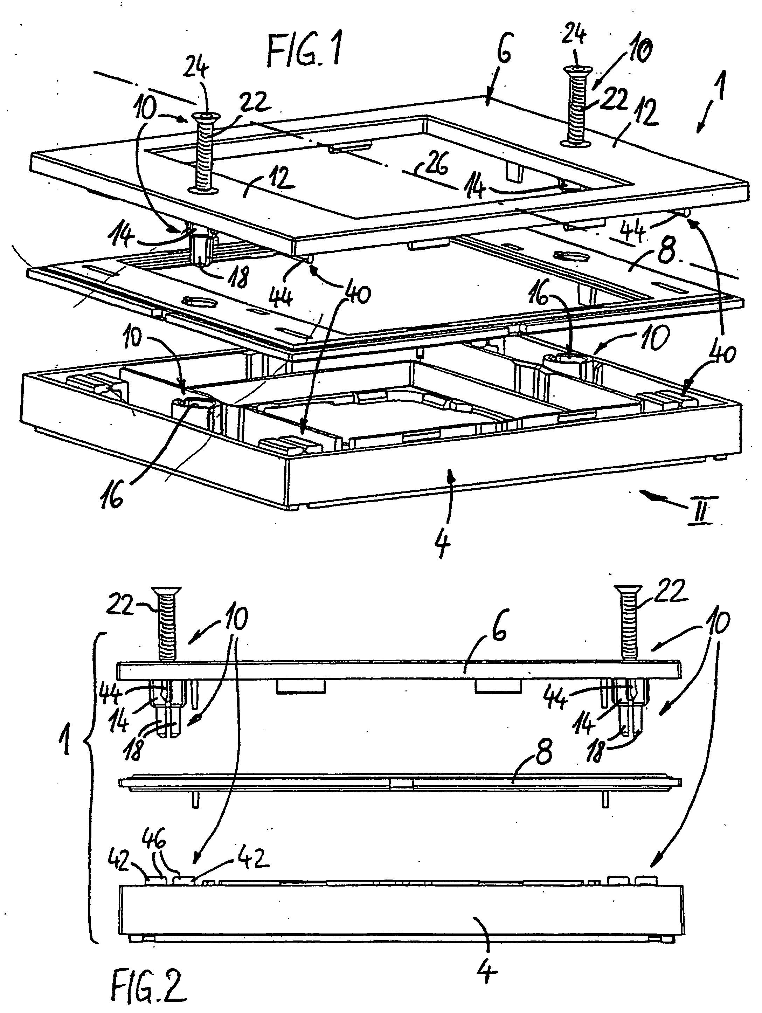

- Fig. 1: eine erfindungsgemäße Rahmen-Anordnung in einer perspektivischen Explosionsdarstellung der Einzelteile,
- Fig. 2: die Anordnung nach Fig. 1 in Seitenansicht (Pfeilrichtung II),
- Fig. 3: eine perspektivische Querschnittansicht der wesentlichen Rahmenteile vor deren Montage,
- Fig. 4: eine Ansicht analog zu Fig. 3 im zusammengesetzten, aber noch nicht arretierten Zustand,
- Fig. 5: eine Darstellung wie in Fig. 4 zusammen mit einem Zentraleinsatz,
- Fig. 6: eine Ansicht ähnlich Fig. 3, jedoch weitergehend geschnitten,
- Fig. 7: den zusammengesetzten Zustand ähnlich Fig. 4 mit zusätzlichem Schnitt nach Fig. 6,
- Fig. 8: einen Diagonalschnitt durch die zusammengesetzte und arretierte Rahmen-Anordnung im Bereich einer Steck-Schraubverbindung,
- Fig. 9: eine vergrößerte Teilansicht des Trägerrahmens mit vom Abdeckrahmen getrennt dargestellten Bestandteilen,
- Fig. 10: eine Ansicht ähnlich Fig. 9 aus anderem Blickwinkel,
- Fig. 11: eine Perspektivansicht auf den gesamten Trägerrahmen (Oberseite) und
- Fig. 12: eine Perspektivansicht des Trägerrahmens auf dessen Montageseite (Unterseite).

In den verschiedenen Figuren der Zeichnungen sind gleiche Teile stets mit den gleichen Bezugsziffern versehen.

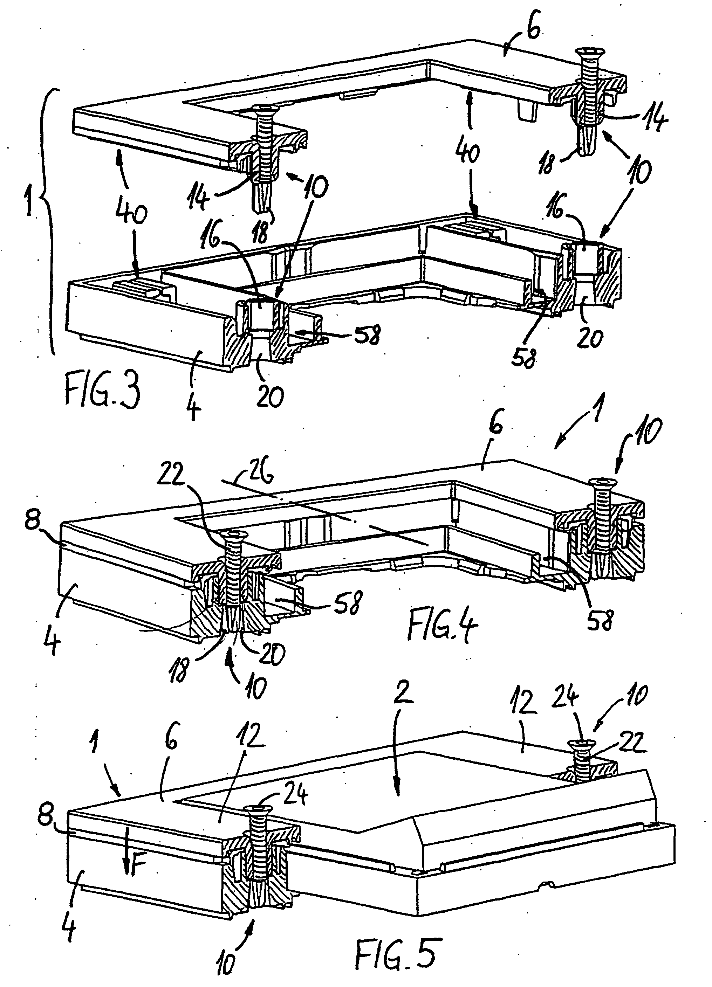

Eine beispielhaft in den Zeichnungsfiguren veranschaulichte Rahmen-Anordnung 1 gehört zu einem selbst nicht dargestellten Elektro-Installationsgerät (Schalter, Steckdose oder dergleichen), und zwar insbesondere zu einem Unterputz-Gerät. Die Rahmen-Anordnung 1 bildet insgesamt ein an dem Installationsgerät befestigbares Rahmenelement zum Abdecken eines einen Zentraleinsatz 2 des Installationsgerätes (vgl. dazu insbesondere Fig. 5) umschließenden Flächenbereichs.

Die Rahmen-Anordnung 1 bzw. das Rahmenelement besteht zumindest aus zwei Teilen, und zwar aus einem Trägerrahmen 4 und einem an dem Trägerrahmen 4 diesen überdeckend befestigbaren Blendrahmen 6. Vorzugsweise ist zusätzlich ein sandwichartig zwischen dem Trägerrahmen 4 und dem Blendrahmen 6 anzuordnender Zwischenrahmen 8 vorgesehen. Dieser Zwischenrahmen 8 dient hauptsächlich als Gestaltungselement zur Erzeugung einer Art von Schattenfuge zwischen dem Trägerrahmen 4 und dem Blendrahmen 6 (siehe z.B. Fig. 4 und 5). Zweckmäßigerweise ist der Zwischenrahmen 8 zur Vormontage insbesondere an dem Blendrahmen 6 fixierbar. Dies kann beispielsweise dadurch erreicht werden, daß der Zwischenrahmen 8 mit Öffnungen zumindest kraftschlüssig auf Ansätzen des Blendrahmens 6 sitzt.

Wie sich beispielsweise aus Fig. 4 und 5 ergibt, liegen der Trägerrahmen 4, der Blendrahmen 6 und gegebenenfalls der Zwischenrahmen 8 in ihrem montierten, miteinander verbundenen Zustand im Bereich ihrer äußeren Ränder im wesentlichen deckungsgleich (kongruent) aufeinander. Der Zwischenrahmen 8 könnte allerdings auch etwas zurückspringen zur Bildung einer noch ausgeprägteren Schattenfuge.

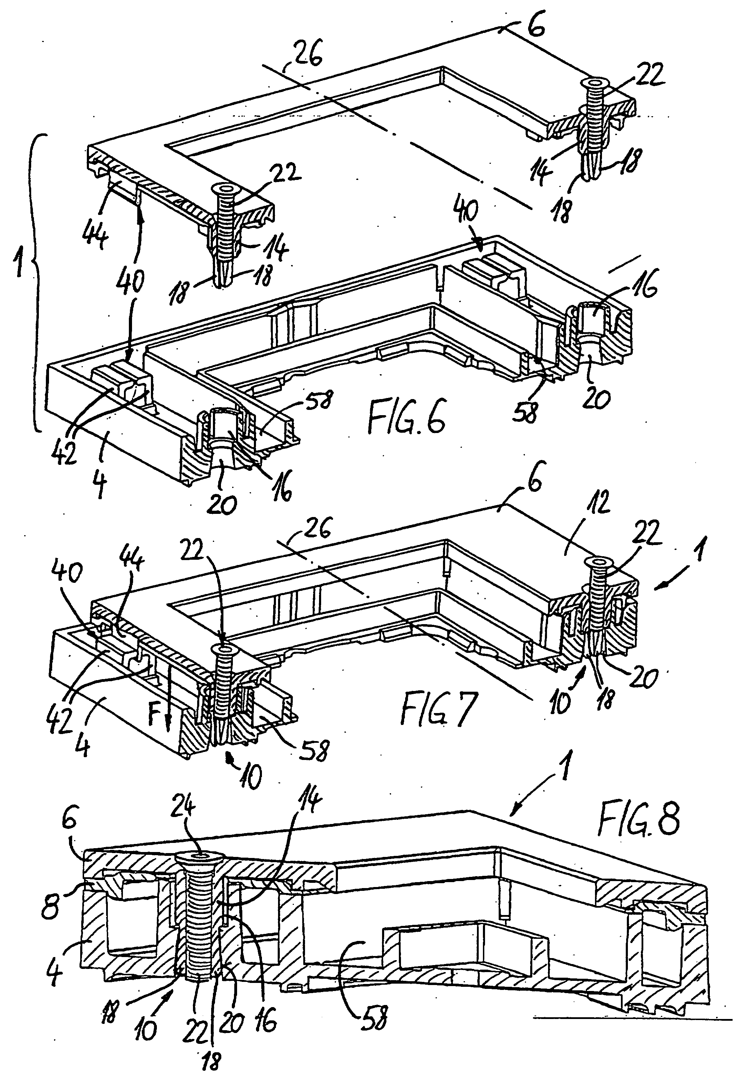

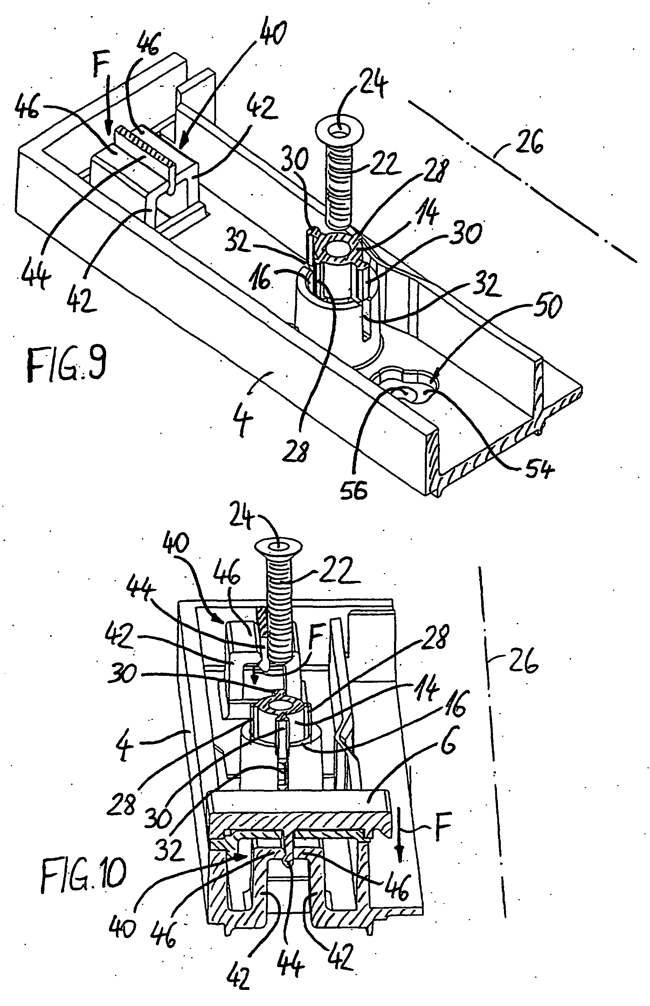

Erfindungsgemäß ist der Blendrahmen 6 an dem Trägerrahmen 4 über Steck-Schraub-Haltemittel derart befestigbar, daß eine Montage allein durch einen senkrecht zu den Rahmenebenen ausgerichteten Steckfügevorgang sowie eine Demontage nur nach einem Schraublösevorgang durchführbar sind. Im dargestellten, bevorzugten Ausführungsbeispiel bestehen die Steck-Schraub-Haltemittel aus zwei jeweils in diametral gegenüberliegenden Rahmenbereichen, insbesondere jeweils mittig im Bereich von zueinander parallelen, gegenüberliegenden Rahmenstegen 12, angeordneten Steck-Schraubverbindungen 10. Jede Steck-Schraubverbindung 10 besteht aus einem Steckansatz 14 des Blendrahmens 6 und aus einer Steckaufnahme 16 des Trägerrahmens 4. Der in die Steckaufnahme 16 einzusteckende Steckansatz 14 weist an seinem Ende Spreizarme 18 auf, die in eine Erweiterung 20 der Steckaufnahme 16 eingreifen und mittels einer durch den Steckansatz 14 einsteckbaren Schraube 22 dübelartig zur kraft- und/oder formschlüssigen Anlage in der Erweiterung 20 spreizbar sind. Diese montierte Arretierstellung ist in Fig. 8 dargestellt. Die Schraube 22 kann zweckmäßig von einer üblichen Senkkopfschraube, beispielsweise in der Größe M3, gebildet sein. Der - in optisch ansprechender Weise in einer Ansenkung des Blendrahmens 6 versenkt anzuordnende - Schraubenkopf weist bevorzugt einen Innenkraftangriff 24 für ein nicht dargestelltes Schrauberwerkzeug auf. Besonders geeignet ist eine sog. "Torx"-Schraube oder einen Innensechskantschraube (Inbusschraube). Die Spreizarme 18 weisen auf ihren einander zugekehrten Innenseiten einen entsprechenden Gegenkonus (nicht bezeichnet) derart auf, daß durch ein einfaches Einstecken der Schraube 22 - ohne Rotation - die Spreizarme 18 radial nach außen gespreizt werden (Fig.8). Dadurch entsteht im Bereich der gespreizten Spreizarme 18 zwischen diesen und dem Gewinde der Schraube 22 ein Kraft- und/oder Kraftformschluß derart, daß die Schraube 22 aus ihrer eingesteckten Montageposition (Fig. 8) durch Herausschrauben in eine die Spreizung der Spreizarme 18 aufhebende Löseposition überführbar ist (z.B. Fig. 7). Nachfolgend können die Rahmenteile 4, 6 wieder voneinander abgezogen werden.

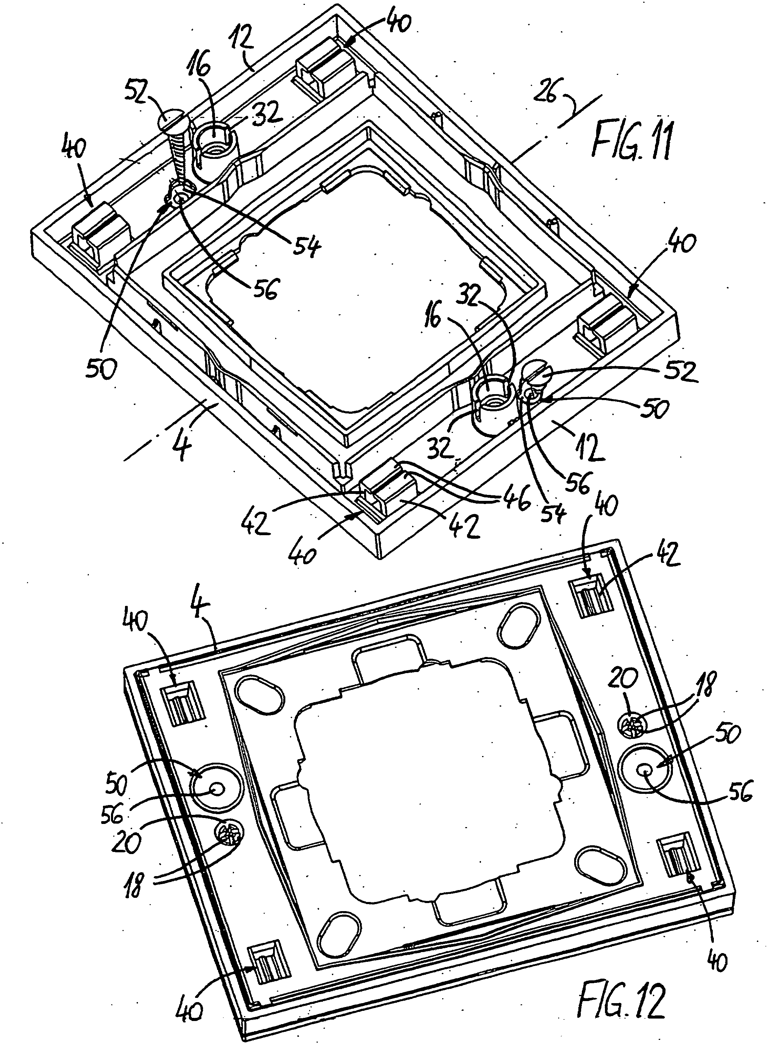

In dem dargestellten, bevorzugten Ausführungsbeispiel sind die Steck-Schraubverbindungen 10 derart ausgebildet, daß durch den Steckfügevorgang eine selbsttätige Ausrichtung des Blendrahmens 6 relativ zu dem Trägerrahmen 4 in eine definierte Relativposition erfolgt, in der beide Teile am Außenrand vorzugsweise deckungsgleich angeordnet sind. Zu diesem Zweck der selbsttätigen Justierung ist die Erweiterung 20 jeder Steckaufnahme 16 als Innenkonus ausgebildet, und jeder Steckansatz 14 weist endseitig mindestens drei, wie dargestellt bevorzugt vier (vgl. Fig. 12) radialsymmetrische Spreizarme 18 auf. Dadurch wird beim Spreizen der Spreizarme 18 eine Selbstzentrierung des Steckansatzes 14 innerhalb der Steckaufnahme 16 und damit die erwähnte Selbstausrichtung der Relativposition zwischen Blendrahmen 6 und Trägerrahmen 4 erreicht.

Alternativ zu dieser dargestellten Ausführungsform können die Steck-Schraubverbindungen 10 auch derart ausgebildet sein, daß bei (während) oder nach dem Steckfügevorgang eine manuelle Justierung der Relativposition zwischen Blendrahmen 6 und Trägerrahmen 4 in Richtung wenigstens einer Justierachse 26 durchführbar ist. Die Justierachse 26 verläuft bevorzugt parallel zu zwei gegenüberliegenden Rahmenstegen, insbesondere zu den beiden Rahmenstegen 12, die jeweils die Steck-Schraubverbindungen 10 aufweisen. Für diese manuelle Justierbarkeit würde dann in Abweichung von der dargestellten Ausführungsform die Erweiterung 20 der Steckaufnahme 16 beispielsweise aus zwei gegenüberliegenden dachartig schrägen Innenflächen bestehen, wobei der Steckansatz 14 endseitig nur zwei zur Anlage an den schrägen Innenflächen entsprechend gegenüberliegende Spreizarme 18 derart aufweisen würde, daß der Steckansatz 14 innerhalb der Steckaufnahme 16 in Richtung einer Symmetrieachse (nicht eingezeichnet) der Spreizarme 18 bzw. der dachförmig schrägen Innenflächen justierbar ist. Die genannte Symmetrieachse verläuft dabei parallel zu der Justierachse 26 von Blend- und Trägerrahmen 6, 4.

Im Übrigen greift jeder Steckansatz 14 zumindest kraftschlüssig in die zugehörige Steckaufnahme 16 ein. Für die beschriebene alternative Möglichkeit der manuellen Justierbarkeit kann jeder Steckansatz 14 derart in die zugehörige Steckaufnahme 16 eingreifen, daß er darin in Richtung einer ebenfalls nicht eingezeichneten Einstellachse relativ beweglich ist. Dabei verläuft auch diese Einstellachse parallel zu der Justierachse 26 von Blend- und Trägerrahmen 6, 4. Wie in den Zeichnungsfiguren dargestellt ist, ist jeder Steckansatz 14 im Wesentlichen hohlzylindrisch mit einem Außendurchmesser ausgebildet, der kleiner als der Innendurchmesser der - bevorzugt als ebenfalls hohlzylindrischer Ansatz des Trägerrahmens 4 gebildeten - Steckaufnahme 16 ist. Dabei weist der Steckansatz 14 auf seinem Außenumfang mindestens zwei längliche und in Steckrichtung verlaufende, sich vom Steckansatz 14 weg radial in entgegengesetzte Richtungen sowie senkrecht zu der Justierachse 26 erstreckende Anlagerippen 28 zur kraftschlüssigen Anlage innerhalb der Steckaufnahme 16 auf. Es wird hierzu insbesondere auf die vergrößerten Detaildarstellungen in Fig. 9 und 10 hingewiesen. Demnach weist jeder Steckansatz 14 weiterhin auf seinem Außenumfang zwei längliche und in Steckrichtung verlaufende, sich vom Steckansatz 14 weg radial in entgegengesetzte Richtungen und dabei parallel zur Justierachse 26 erstreckende Einsteckrippen 30 auf, die zum kraftschlüssigen Einstecken in korrespondierende Aufnahmeschlitze 32 der Steckaufnahme 16 dienen. Diese Ausgestaltung ermöglicht eine Justierbewegung wahlweise in Richtung jeweils einer der beiden Einsteckrippen 30 innerhalb der Steckaufnahme 16 in Richtung der Justierachse 26.

Weiterhin ist vorzugsweise der Blendrahmen 6 mit dem Trägerrahmen 4 zusätzlich über insbesondere vier in Rahmeneckbereichen angeordnete Steck-Rastverbindungen 40 verbindbar. Hierbei ist jede Steck-Rastverbindung 40 vorteilhafterweise derart ausgebildet, daß zwischen Blendrahmen 6 und Trägerrahmen 4 eine die beiden Teile gegeneinander ziehende Vorspannkraft F erzeugt wird. Diese Ausgestaltung ist insbesondere für größere Rahmenanordnungen wichtig, und zwar vor allem im Zusammenhang mit den beiden mittig im Bereich der Rahmenstege 12 angeordneten Steck-Schraubverbindungen 10. Durch die zusätzlichen Steck-Rastverbindungen 40 und die dadurch erzeugte Vorspannkraft F wird stets ein "Selbsteinzug" gewährleistet, so daß die Rahmenteile über ihren gesamten Umfangsbereich hinweg fest und bündig aneinander liegen. Dabei kann jede Steck-Rastverbindung 40 auch derart ausgebildet sein, daß sie die oben erwähnte manuelle Justierung zwischen Blendrahmen 6 und Trägerrahmen 4 in Richtung der Justierachse 26 ermöglicht.

Im dargestellten Ausführungsbeispiel besteht jede Steck-Rastverbindung 40 einerseits aus zwei federelastischen Rastarmen 42 und andererseits aus einem zwischen die Rastarme 42 einsteckbaren Steckeransatz 44. Im dargestellten Beispiel sind die Rastarme 42 einstückige Bestandteile des Trägerrahmens 4 und der Steckeransatz 44 einstückiger Bestandteil des Blendrahmens 6. Eine Umkehrung (kinematische Umkehr) ist aber ebenfalls möglich. Die Rastarme 42 wirken mit dem Steckeransatz 44 über nicht bezeichnete Schrägflächen derart zusammen, daß durch Ihre Federelastizität über die Schrägflächen die die Rahmenteile 4, 6 zusammenziehende Vorspannkraft F erzeugt wird. Hierzu wird insbesondere auf Fig. 9 und 10 verwiesen. Die Rastarme 42 weisen an ihren freien Enden einander zugekehrte Andruckstege 46 zur federnden, klemmenden Anlage an dem Steckeransatz 44 auf. Der Steckeransatz 44 ist bevorzugt nach Art eines Flachsteckers ausgebildet, so daß er in seinem zwischen die parallelen Rastarme 42 eingesteckten Zustand relativ zu diesen in Richtung einer Querachse beweglich ist, die wiederum parallel zu der Justierachse 26 verläuft. Auf diese Weise wird auch im Bereich der Steck-Rastverbindungen 40 die oben beschriebene Alternative der manuellen Justierbarkeit ermöglicht.

Wie sich noch aus Fig. 9, 11 und 12 ergibt, kann der Trägerrahmen 4 mit Vorteil in von dem Blendrahmen 6 überdeckten Bereichen Schraubenlöcher 50 für beispielhaft in Fig. 11 dargestellte Befestigungsschrauben 52 aufweisen, die zur zusätzlichen Schraubbefestigung des Trägerrahmens 4 im jeweils neben dem Installationsgerät liegenden Bereich einer Montagefläche dienen. Hierbei ist es vorteilhaft, wenn jedes Schraubenloch 50 als Langlochöffnung ausgebildet ist, weil hierdurch auch bezüglich der zusätzlichen Schraubbefestigung eine Justagemöglichkeit gegeben ist. Weiterhin ist es hierbei vorteilhaft, wenn im Bereich jedes Schraubenloches 50 bzw. jeder Langlochöffnung vor der ersten Montage ein verdünnter, herausbrechbarer Wandungsabschnitt 54 angeordnet ist, wobei dieser Wandungsabschnitt 54 ein ― bezogen auf die Langlochöffnung - zentrisches, kreisförmiges Anreißloch 56 aufweist. Wie weiterhin am besten in Fig. 9 erkennbar ist, kann jede Langlochöffnung 50 durch zwei konzentrisch "ineinanderliegende", gegeneinander winkelversetzte Langlöcher gebildet sein. Hierdurch wird eine besonders gute Justiermöglichkeit erreicht. Der herausbrechbare Wandungsabschnitt 54 mit dem Anreißloch 56 gestattet ein einfaches Anzeichnen der für die Schraubbefestigung in der Montagefläche herzustellenden Dübelbohrung. Nach dem Anzeichnen kann dann der Wandungsabschnitt 54 entfernt werden, wodurch die gesamte Langlochöffnung 50 zum Justieren gegenüber der Schraube 52 zur Verfügung steht.

Abschließend sei der Vollständigkeit halber noch erwähnt, daß die Rahmen-Anordnung 1 in der dargestellten Ausführungsform speziell für wassergeschützte Geräte einsetzbar ist. Beispielsweise besitzt dazu gemäß Fig. 3 und 4 der Trägerrahmen 4 umlaufende, kanalartige Kammern 58 zur Wasseraufnahme und -ableitung nach Außen, um ein Eindringen von Wasser in den Bereich des eigentlichen Installationsgerätes zu verhindern.

## Patentansprüche

1. Rahmen-Anordnung (1) für Elektro-Installationsgeräte, wie Schalter, Steckdosen und dergleichen, insbesondere für Unterputz-Geräte, mit einem an dem Installationsgerät befestigbaren Rahmenelement zum Abdecken eines einen Zentraleinsatz (2) des Installationsgerätes umschließenden Flächenbereiches, wobei das Rahmenelement zumindest zweiteilig aus einem an dem Installationsgerät befestigbaren Trägerrahmen (4) und einem an dem Trägerrahmen (4) diesen überdeckend **dadurch gekennzeichnet, dass** befestigbaren Blendrahmen (6) besteht, der Blendrahmen (6) an dem Trägerrahmen (4) über Steck-Schraub-Haltemittel (10) derart befestigbar ist, daß eine Montage allein durch einen Steckfügevorgang sowie eine Demontage nur nach einem Schraublösevorgang durchführbar sind.

2. Rahmen-Anordnung nach Anspruch 1,
**dadurch gekennzeichnet, dass** das Rahmenelement zusätzlich einen sandwichartig zwischen dem Trägerrahmen (4) und dem Blendrahmen (6) anzuordnenden Zwischenrahmen (8) aufweist.

3. Rahmen-Anordnung nach Anspruch 2,
**dadurch gekennzeichnet, dass** der Zwischenrahmen (8) zur Vormontage insbesondere an dem Blendrahmen (6) fixierbar ist.

4. Rahmen-Anordnung nach einem der Ansprüche 1 bis 3,
**dadurch gekennzeichnet, dass** der Trägerrahmen (4), der Blendrahmen (6) und gegebenenfalls der Zwischenrahmen (8) in ihrem montierten, miteinander verbundenen Zustand im Bereich ihrer äußeren Ränder im wesentlichen deckungsgleich aufeinander liegen.

5. Rahmen-Anordnung nach einem der Ansprüche 1 bis 4,
**dadurch gekennzeichnet, dass** die Steck-Schraub-Haltemittel aus mindestens zwei in diametral gegenüberliegenden Rahmenbereichen, insbesondere jeweils mittig im Bereich von zueinander parallelen Rahmenstegen (12), angeordneten Steck-Schraubverbindungen (10) bestehen.

6. Rahmen-Anordnung nach Anspruch 5,
**dadurch gekennzeichnet, dass** jede Steck-Schraubverbindung (10) aus einem Steckansatz (14) des Blendrahmens (6) und aus einer Steckaufnahme (16) des Trägerrahmens (4) besteht, wobei der in die Steckaufnahme (16) einzusteckende Steckansatz (14) an seinem Ende Spreizarme (18) aufweist, die in eine Erweiterung (20) der Steckaufnahme (16) eingreifen und mittels einer durch den Steckansatz (14) einsteckbaren Schraube (22) spreizbar sind.

7. Rahmen-Anordnung nach Anspruch 6,
**dadurch gekennzeichnet, dass** zwischen dem Blendrahmen (6) und dem Gewinde der eingesteckten Schraube (22), insbesondere im Bereich der gespreizten Spreizarme (18), ein Kraft- und/oder Kraftformschluß derart besteht, daß die Schraube (22) aus ihrer eingesteckten Montageposition durch Herausschrauben in eine die Spreizung der Spreizarme (18) aufhebende Löseposition überführbar ist.

8. Rahmen-Anordnung nach einem der Ansprüche 1 bis 7,
**dadurch gekennzeichnet, dass** die Steck-Schraub-Haltemittel (10) derart ausgebildet sind, daß durch den Steckfügevorgang eine selbsttätige Ausrichtung des Blendrahmens (6) relativ zu dem Trägerrahmen (4) in eine definierte Relativposition erfolgt.

9. Rahmen-Anordnung nach einem der Ansprüche 6 bis 8,
**dadurch gekennzeichnet, dass** die Erweiterung (20) der Steckaufnahme (16) als Innenkonus ausgebildet ist und der Steckansatz (14) endseitig mindestens drei radialsymmetrische Spreizarme (18) aufweist, so daß beim Spreizen eine Selbstzentrierung des Steckansatzes (14) innerhalb der Steckaufnahme (16) und damit eine Selbstausrichtung der Relativposition zwischen Blendrahmen (6) und Trägerrahmen (4) erreicht wird.

10. Rahmen-Anordnung nach einem der Ansprüche 1 bis 7,
**dadurch gekennzeichnet, dass** die Steck-Schraub-Haltemittel (10) derart ausgebildet sind, daß bei oder nach dem Steckfügevorgang eine manuelle Justierung der Relativposition zwischen Blendrahmen (6) und Trägerrahmen (4) in Richtung wenigstens einer Justierachse (26) durchführbar ist, wobei die Justierachse (26) parallel zu zwei gegenüberliegenden Rahmenstegen (12) verläuft.

11. Rahmen-Anordnung nach einem der Ansprüche 6, 7 oder 10,
**dadurch gekennzeichnet, dass** die Erweiterung (20) der Steckaufnahme (16) aus zwei gegenüberliegenden, dachartig schrägen Innenflächen besteht und der Steckansatz (16) endseitig zwei entsprechend zur Anlage an den schrägen Innenflächen gegenüberliegende Spreizarme (18) derart aufweist, daß der Steckansatz (14) in der Steckaufnahme (16) in Richtung einer Symmetrieachse der Spreizarme (18) und der schrägen Innenflächen justierbar ist, wobei die Symmetrieachse parallel zu der Justierachse (26) von Blend- und Trägerrahmen (6, 4) verläuft.

12. Rahmen-Anordnung nach einem der Ansprüche 6 bis 11,
**dadurch gekennzeichnet, dass** jeder Steckansatz (14) zumindest kraftschlüssig in die zugehörige Steckaufnahme (16) eingreift.

13. Rahmen-Anordnung nach einem der Ansprüche 10 bis 12,
**dadurch gekennzeichnet, dass** jeder Steckansatz (14) derart in die zugehörige Steckaufnahme (16) eingreift, daß er darin in Richtung einer Einstellachse relativ beweglich ist, wobei die Einstellachse parallel zu der Justierachse (26) von Blend- und Trägerrahmen (6, 4) verläuft.

14. Rahmen-Anordnung nach einem der Ansprüche 10 bis 13,
**dadurch gekennzeichnet, dass** jeder Steckansatz (14) im Wesentlichen hohlzylindrisch mit einem Außendurchmesser ausgebildet ist, der kleiner als der Innendurchmesser der bevorzugt ebenfalls hohlzylindrischen Steckaufnahme (16) ist, wobei der Steckansatz (14) auf seinem Außenumfang mindestens zwei längliche und in Steckrichtung verlaufende sich vom Steckansatz (14) weg radial in entgegengesetzte Richtungen und senkrecht zur Justierachse (26) bzw. zur Einstellachse erstreckende Anlagerippen (28) zur kraftschlüssigen Anlage in der Steckaufnahme (16) aufweist.

15. Rahmen-Anordnung nach einem der Ansprüche 10 bis 14,
**dadurch gekennzeichnet, dass** jeder Steckansatz (14) auf seinem Außenumfang zwei längliche und in Steckrichtung verlaufende, sich vom Steckansatz (14) weg radial in entgegengesetzte Richtungen und parallel zur Justierachse (26) bzw. zur Einstellachse erstreckende Einsteckrippen (30) zum kraftschlüssigen Einstecken in korrespondierende Aufnahmeschlitze (32) der Steckaufnahme (16) aufweist

16. Rahmen-Anordnung nach einem der Ansprüche 1 bis 15,
**dadurch gekennzeichnet, dass** der Blendrahmen (6) mit dem Trägerrahmen (4) zusätzlich über insbesondere vier in Rahmeneckbereichen angeordnete Steck-Rastverbindungen (40) verbindbar ist.

17. Rahmen-Anordnung nach Anspruch 16,
**dadurch gekennzeichnet, dass** jede Steck-Rastverbindung (40) derart ausgebildet ist, daß zwischen Blendrahmen (6) und Trägerrahmen (4) eine die beiden Teile gegeneinander ziehende Vorspannkraft (F) erzeugt wird.

18. Rahmen-Anordnung nach Anspruch 10 und nach Anspruch 16 oder 17,
**dadurch gekennzeichnet , dass** jede Steck-Rastverbindung (40) derart ausgebildet ist, daß sie die manuelle Justierung zwischen Blendrahmen (6) und Trägerrahmen (4) in Richtung der Justierachse (26) ermöglicht.

19. Rahmen-Anordnung nach einem der Ansprüche 16 bis 18,
**dadurch gekennzeichnet, dass** jede Steck-Rastverbindung (40) einerseits aus zwei federelastischen Rastarmen (42) und andererseits aus einem zwischen die Rastarme (42) einsteckbaren Steckeransatz (44) besteht, wobei die Rastarme (42) mit dem Steckeransatz (44) über Schrägflächen derart zusammenwirken, daß durch ihre Federelastizität über die Schrägflächen die die Rahmenteile (4, 6) zusammenziehende Vorspannkraft (F) erzeugt wird.

20. Rahmen-Anordnung nach Anspruch 19,
**dadurch gekennzeichnet, dass** der Steckeransatz (44) nach Art eines Flachsteckers ausgebildet und in seinem zwischen die Rastarme (42) eingesteckten Zustand relativ zu diesem in Richtung einer Querachse beweglich ist, wobei die Querachse parallel zu der Justierachse (26) verläuft.

21. Rahmen-Anordnung nach einem der Ansprüche 1 bis 20,
**dadurch gekennzeichnet, , dass** der Trägerrahmen (4) in von dem Blendrahmen (6) überdeckten Bereichen Schraubenlöcher (50) zur zusätzlichen Schraubbefestigung im jeweils neben dem Installationsgerät liegenden Bereich einer Montagefläche aufweist

22. Rahmen-Anordnung nach Anspruch 21,
**dadurch gekennzeichnet, dass** jedes Schraubenloch (50) als Langlochöffnung ausgebildet ist.

23. Rahmen-Anordnung insbesondere nach Anspruch 22,
**dadurch gekennzeichnet, dass** im Bereich jeder Langlochöffnung (50) ein verdünnter, herausbrechbarer Wandungsabschnitt (54) angeordnet ist, wobei dieser Wandungsabschnitt (54) ein bezogen auf die Langlochöffnung (50) zentrisches, kreisförmiges Anreißloch (56) aufweist.

24. Rahmen-Anordnung nach Anspruch 22 oder 23,
**dadurch gekennzeichnet, dass** jede Langlochöffnung (50) - durch zwei konzentrische, gegeneinander winkelversetzte Langlöcher gebildet ist.

## Claims

1. Frame arrangement (1) for electrical service devices, such as switches, sockets and the like, in particular for flush-mounted devices, having a frame element which can be fixed to the service device for the purpose of covering a surface area surrounding a central insert (2) of the service device, the frame element comprising, in at least two parts, a mounting frame (4) which can be fixed to the service device and a cover frame (6) which can be fixed to the mounting frame (4) such that it covers it, **characterized in that** the cover frame (6) can be fixed to the mounting frame (4) by means of plug-and-screw retaining means (10) such that it can only be assembled using a plug-in joining step and can only be dismantled after an unscrewing step.

2. Frame arrangement according to Claim 1, **characterized in that** the frame element also has an intermediate frame (8) which can be arranged in the manner of a sandwich between the mounting frame (4) and the cover frame (6).

3. Frame arrangement according to Claim 2, **characterized in that** the intermediate frame (8) can be fixed, for the purpose of initial assembly, in particular to the cover frame (6).

4. Frame arrangement according to one of Claims 1 to 3, **characterized in that** the mounting frame (4), the cover frame (6) and, if appropriate, the intermediate frame (8) lie one on top of the other such that they are essentially flush in the region of their outer edges when they are assembled and connected to one another.

5. Frame arrangement according to one of Claims 1 to 4, **characterized in that** the plug-and-screw retaining means comprise at least two plug-and-screw connections (10) arranged in diametrically opposite frame regions, in particular in each case centrally in the region of frame webs (12) which are parallel to one another.

6. Frame arrangement according to Claim 5, **characterized in that** each plug-and-screw connection (10) comprises a plug attachment (14) on the cover frame (6) and a plug receptacle (16) in the mounting frame (4), the plug attachment (14) which can be inserted into the plug receptacle (16) having, at its end, spreading arms (18) which engage in an extension (20) on the plug receptacle (16) and which can be spread apart by means of a screw (22) which can be inserted through the plug attachment (14).

7. Frame arrangement according to Claim 6, **characterized in that** a force-fitting connection and/or an interlocking and force-fitting connection is formed between the cover frame (6) and the thread of the inserted screw (22), in particular in the region of the spread-apart spreading arms (18), such that the screw (22) can be moved, by being unscrewed, from its inserted assembly position to a release position in which the spreading arms (18) are no longer spread apart.

8. Frame arrangement according to one of Claims 1 to 7, **characterized in that** the plug-and-screw retaining means (10) are formed such that the cover frame (6) is automatically aligned relative to the mounting frame (4) in a defined relative position by means of the plug-in joining step.

9. Frame arrangement according to one of Claims 6 to 8, **characterized in that** the extension (20) on the plug receptacle (16) is in the form of an inside cone, and the plug attachment (14) has, at its end, at least three radially symmetrical spreading arms (18), so that, when the arms are spread apart, the plug attachment (14) is automatically centred within the plug receptacle (16), which automatically aligns the relative position between the cover frame (6) and the mounting frame (4).

10. Frame arrangement according to one of Claims 1 to 7, **characterized in that** the plug-and-screw retaining means (10) are formed such that, during or after the plug-in joining step, the relative position between the cover frame (6) and the mounting frame (4) can be adjusted manually in the direction of at least one adjustment axis (26), the adjustment axis (26) running parallel to two opposing frame webs (12).

11. Frame arrangement according to one of Claims 6, 7 or 10, **characterized in that** the extension (20) of the plug receptacle (16) comprises two opposing inner surfaces which slope in the manner of a roof, and the plug attachment (16) has, at its end, two opposing spreading arms (18) suitable for bearing against the sloping inner surfaces such that the plug attachment (14) can be adjusted in the plug receptacle (16) in the direction of an axis of symmetry of the spreading arms (18) and the sloping inner surfaces, the axis of symmetry running parallel to the adjustment axis (26) of the cover and mounting frames (6, 4).

12. Frame arrangement according to one of Claims 6 to 11, **characterized in that** each plug attachment (14) engages at least in a force-fitting manner in the associated plug receptacle (16).

13. Frame arrangement according to one of Claims 10 to 12, **characterized in that** each plug attachment (14) engages in the associated plug receptacle (16) such that it can move relatively therein in the direction of an adjusting axis, the adjusting axis running parallel to the adjustment axis (26) of the cover and mounting frames (6, 4).

14. Frame arrangement according to one of Claims 10 to 13, **characterized in that** each plug attachment (14) is essentially hollow-cylindrical with an external diameter which is smaller than the internal diameter of the plug receptacle (16) which is preferably likewise hollow-cylindrical, the plug attachment (14) having on its outer circumference at least two elongate bearing ribs (28) for bearing in a force-fitting manner in the plug receptacle (16), said ribs (28) running in the plug-in direction and extending away from the plug attachment (14) radially in opposing directions and perpendicular to the adjustment axis (26) and the adjusting axis.

15. Frame arrangement according to one of Claims 10 to 14, **characterized in that** each plug attachment (14) has on its outer circumference two elongate insertion ribs (30) for force-fitting insertion into corresponding receiving slots (32) in the plug receptacle (16), said ribs (30) running in the plug-in direction and extending away from the plug attachment (14) radially in opposing directions and parallel to the adjustment axis (26) and the adjusting axis.

16. Frame arrangement according to one of Claims 1 to 15, **characterized in that** the cover frame (6) can also be connected to the mounting frame (4) by means of, in particular, four plug-and-latching connections (40) arranged in the corner regions of the frame.

17. Frame arrangement according to Claim 16, **characterized in that** each plug-and-latching connection (40) is formed such that a prestress force (F) drawing the two parts towards one another is produced between the cover frame (6) and the mounting frame (4).

18. Frame arrangement according to Claim 10 and according to Claim 16 or 17, **characterized in that** each plug-and-latching connection (40) is formed such that it allows manual adjustment between the cover frame (6) and the mounting frame (4) in the direction of the adjustment axis (26).

19. Frame arrangement according to one of Claims 16 to 18, **characterized in that** each plug-and-latching connection (40) comprises, on the one hand, two resilient latching arms (42) and, on the other hand, a plug attachment (44) which can be inserted between the latching arms (42), the latching arms (42) interacting with the plug attachment (44) over sloping surfaces such that, owing to their resilience, the prestress force (F) drawing the frame parts (4, 6) together is produced over the sloping surfaces.

20. Frame arrangement according to Claim 19, **characterized in that** the plug attachment (44) is in the form of a flat plug and can be moved, when it is inserted between the latching arms (42), relative to this position in the direction of a transverse axis, the transverse axis running parallel to the adjustment axis (26).

21. Frame arrangement according to one of Claims 1 to 20, **characterized in that** the mounting frame (4) has, in regions covered by the cover frame (6), screw holes (50) for additional screw-fixing in the region of a mounting surface which lies adjacent to the service device.

22. Frame arrangement according to Claim 21, **characterized in that** each screw hole (50) is in the form of a slot opening.

23. Frame arrangement in particular according to Claim 22, **characterized in that** a thinned wall section (54) which can be knocked through is arranged in the region of each slot opening (50), this wall section (54) having a central, circular marker hole (56) based on the slot opening (50).

24. Frame arrangement according to Claim 22 or 23, **characterized in that** each slot opening (50) is formed by two concentric slots which are offset at an angle with respect to one another.

## Revendications

1. Cadre (1) pour appareils d'installations électriques tels que des interrupteurs, des socles de prises et analogues, en particulier pour appareils encastrés dans les murs, qui comprend un élément de cadre pouvant être fixé à l'appareil d'installation et destiné à recouvrir une région de surface qui entoure un corps central (2) de l'appareil d'installation, l'élément de cadre, en au moins deux pièces, étant composé d'un cadre de support (4) pouvant être fixé à l'appareil d'installation et d'un cadre de cache (6) pouvant être fixé au cadre de support (4) en recouvrant ce dernier, **caractérisé en ce que** le cadre de cache (6) peut être fixé au cadre de support (4) par l'intermédiaire de moyens de retenue à embrochage-vissage (10) de telle manière qu'un montage puisse être exécuté par une manoeuvre d'assemblage par embrochage et qu'un démontage ne puisse être exécuté qu'après une opération de dévissage.

2. Cadre selon la revendication 1, **caractérisé en ce que** l'élément de cadre présente en supplément un cadre intermédiaire (8) disposé en interposition entre le cadre de support (4) et le cadre de cache (6).

3. Cadre selon la revendication 2, **caractérisé en ce que**, pour le prémontage, le cadre intermédiaire (8) peut être fixé, en particulier sur le cadre de cache (6).

4. Cadre selon une des revendications 1 à 3, **caractérisé en ce que**, dans leur état monté, assemblé, le cadre de support (4), le cadre de cache (6) et éventuellement le cadre intermédiaire (8) sont disposés l'un sur l'autre, sensiblement en superposition dans la région de leurs bords extérieurs.

5. Cadre selon une des revendications 1 à 4, **caractérisé en ce que** les moyens de retenue à embrochage-vissage sont composés d'au moins deux assemblages à embrochage-vissage (10) disposés dans des régions diamétralement opposées du cadre, en particulier chacun en position centrale dans la région de nervures de cadre (12) qui sont parallèles entres elles.

6. Cadre selon la revendication 5, **caractérisé en ce que** chaque assemblage à embrochage-vissage (10) est composé d'un appendice d'embrochage (14) du cadre de cache (6) et d'un logement d'embrochage (16) du cadre de support (4), l'appendice d'embrochage (14) qui doit s'embrocher dans le logement d'embrochage (16) présentant à son extrémité des bras à expansion (18) qui entrent en prise dans un élargissement (20) du logement d'embrochage (16) et qui peuvent être écartés au moyen d'une vis (22) pouvant être enfoncée à travers l'appendice d'embrochage (14).

7. Cadre selon la revendication 6, **caractérisé en ce qu'**il se forme, entre le cadre de cache (6) et le filetage de la vis insérée (22), en particulier dans la région des bras à expansion (18) écartés, une liaison par force et/ou par force et forme, de telle sorte que, par dévissage, on peut faire passer la vis (22) de sa position de montage insérée à une position de déverrouillage qui supprime l'expansion des bras à expansion (18).

8. Cadre selon une des revendications 1 à 7, **caractérisé en ce que** les moyens de retenue à embrochage-vissage (10) sont constitués de manière que, sous l'effet de l'opération d'embrochage, il se produise un alignement du cadre de cache (6) par rapport au cadre de support (4) dans une position relative définie.

9. Cadre selon une des revendications 6 à 8, **caractérisé en ce que** l'élargissement (20) du logement de broches (16) est constitué par un cône intérieur et l'appendice d'embrochage (14) présente à l'extrémité au moins trois bras à expansion (18) possédant une symétrie radiale, de sorte que lors de l'expansion, on obtient un auto-centrage de l'appendice d'embrochage (14) à l'intérieur du logement d'embrochage (16) et, de cette façon, un auto-alignement de la position relative entre le cadre de cache (6) et le cadre de support (4).

10. Cadre selon une des revendications 1 à 7, **caractérisé en ce que** les moyens de retenue à embrochage-vissage (10) sont conformés de manière que, au moment ou après l'opération d'assemblage par embrochage, il peut s'effectuer un ajustement manuel de la position relative entre le cadre de cache (6) et le cadre de support (4) selon la direction d'au moins un axe d'ajustement (26), l'axe d'ajustement (26) s'étendant parallèlement à deux nervures opposées (12) du cadre.

11. Cadre selon une des revendications 6, 7 ou 10, **caractérisé en ce que** l'élargissement (20) du logement d'embrochage (16) est composé de deux surfaces intérieures opposées, inclinées en forme de toit, et l'appendice d'embrochage (14) présente à l'extrémité deux bras à expansion (18) opposés de façon appropriée pour s'appuyer contre les surfaces intérieures inclinées de telle sorte que l'appendice d'embrochage (14) puisse être ajusté dans le logement d'embrochage (16) selon la direction d'un axe de symétrie des bras à expansion (18) et des surfaces intérieures inclinées, l'axe de symétrie s'étendant parallèlement à l'axe d'ajustement (26) des cadres de cache et de support (6, 4).

12. Cadre selon une des revendications 6 à 11, **caractérisé en ce que** chaque appendice d'embrochage (14) entre en prise dans le logement d'embrochage correspondant (16) en établissant au moins une liaison par force.

13. Cadre selon une des revendications 10 à 12, **caractérisé en ce que** chaque appendice d'embrochage (14) est engagé dans le logement d'embrochage (16) correspondant de telle manière qu'il soit mobile relativement selon la direction d'un axe de réglage, l'axe de réglage s'étendant parallèlement à l'axe d'ajustement (26) du cadre de cache et du cadre de support (6, 4).

14. Cadre selon une des revendications 10 à 13, **caractérisé en ce que** chaque appendice d'embrochage (14) est de forme sensiblement cylindrique creuse avec un diamètre extérieur qui est plus petit que le diamètre intérieur du logement d'embrochage (16) qui est de préférence lui aussi cylindrique creux, l'appendice d'embrochage (14) présentant sur sa périphérie extérieure au moins deux nervures d'appui (28) allongées, s'étendant dans la direction d'embrochage, qui font saillie sur l'appendice d'embrochage (14) radialement dans des directions opposées et s'étendent perpendiculairement à l'axe d'ajustement (26) ou l'axe de réglage, pour s'appuyer dans le logement d'embrochage (16) en établissant une liàison par force.

15. Cadre selon une des revendications 10 à 14, **caractérisé en ce que** chaque appendice d'embrochage (14) présente sur-sa périphérie extérieure deux nervures d'emboîtement (30) allongées et s'étendant dans la direction d'embrochage, qui font saillie sur l'appendice d'embrochage (14) radialement dans des directions opposées et s'étendent parallèlement à l'axe d'ajustement (26) ou à l'axe de réglage, et sont destinées à s'emboîter dans des fentes de logement correspondantes (32) du logement d'embrochage (16) en établissant une liaison par force.

16. Cadre selon une des revendications 1 à 15, **caractérisé en ce que** le cadre de cache (6) peut être relié en supplément au cadre de support (4) par l'intermédiaire d'en particulier quatre liaisons à embrochage-encliquetage (40) disposées dans des régions des angles des cadres.

17. Cadre selon la revendication 16, **caractérisé en ce que** chaque liaison à embrochage-encliquetage (40) est réalisée de manière à produire, entre le cadre de cache (6) et le cadre de support (4), une force de précontrainte (F) qui attire les deux éléments l'un vers l'autre.

18. Cadre selon la revendication 10 et selon la revendication 16 ou 17, **caractérisé en ce que** chaque liaison à embrochage-encliquetage (40) est réalisée de manière à permettre l'ajustement manuel entre le cadre de cache (6) et le cadre de support (4) selon la direction de l'axe d'ajustement (26).

19. Cadre selon une des revendications 16 à 18, **caractérisé en ce que** chaque assemblage à embrochage-encliquetage (40) est composé, d'une part, de deux bras d'encliquetage (42) élastiques à la façon de ressorts et, d'autre part, d'un appendice d'embrochage (44) pouvant être embroché entre les bras d'encliquetage (42), les bras d'encliquetage (42) coopérant avec l'appendice d'embrochage (44) par l'intermédiaire de surfaces inclinées de telle manière que la force de précontrainte (F) qui attire les parties de cadre (4, 6) l'une vers l'autre soit produite par leur élasticité de ressort par l'intermédiaire des surfaces inclinées.

20. Cadre selon la revendication 19,
**caractérisé en ce que** l'appendice d'embrochage (44) a la forme d'une broche mâle plate et, dans son état inséré entre les bras d'encliquetage (42), il soit mobile par rapport à cet état selon la direction d'un axe transversal, l'axe transversal s'étendant parallèlement à l'axe d'ajustement (26).

21. Cadre selon une des revendications 1 à 20, **caractérisé en ce que** le cadre de support (4) présente, dans des régions recouvertes par le cadre de cache (6), des trous de vis (50) destinés à la fixation additionnelle par vis dans la région d'une surface de montage qui se trouve à chaque fois à côté de l'appareil d'installation.

22. Cadre selon la revendication 21,
**caractérisé en ce que** chaque trou de vis (50) est constitué par une ouverture en forme de trou oblong.

23. Cadre en particulier selon la revendication 22, **caractérisé en ce que**, dans la région de chaque ouverture en forme de trou oblong (50), est disposé un segment de paroi aminci (54) défonçable, ce segment de paroi (54) présentant un trou d'arrachage (56) central par rapport à l'ouverture en forme de trou oblong (50).

24. Cadre selon la revendication 22 ou 23, **caractérisé en ce que** chaque ouverture en forme de trou oblong (50) est formée de deux trous oblongs concentriques décalés angulairement l'un par rapport à l'autre.
